# EUROPÄISCHE PATENTSCHRIFT

(11) **EP 3 457 870 B1**
(45) Veröffentlichungstag und Bekanntmachung des Hinweises auf die Patenterteilung: **14.04.2021**
(21) Anmeldenummer: 17720076.3
(22) Anmeldetag: 25.04.2017
(51) Int. Cl.: A23P 20/20, A23P 30/20

(54) **SYSTEM ZUM DRUCK UND GAREN EINES NAHRUNGSMITTELS**
SYSTEM FOR PRINTING AND COOKING OF A FOOD ITEM
SYSTEME POUR IMPRIMER ET CUIRE D'UNE DENREE ALIMENTAIRE

(30) Priorität: 18.05.2016 DE 102016208461
(43) Veröffentlichungstag der Anmeldung: 27.03.2019
(73) Patentinhaber: BSH Hausgeräte GmbH, 81739 München (DE)
(72) Erfinder: ERBE, Sebastian, 75015 Bretten (DE); GÜL, Ugur Dogan, 34394 Istanbul (TR); SCHUSTER, Lucia, 70197 Stuttgart (DE); SUAREZ IRIBARNE, Alvaro, 80339 München (DE)
(86) Internationale Anmeldenummer: PCT/EP2017/059801
(87) Internationale Veröffentlichungsnummer: WO 2017/198424

(56) Entgegenhaltungen:
- EP-A1- 2 364 593
- WO-A1-2014/190217
- WO-A1-2016/053681
- WO-A1-2016/059023
- US-A1- 2012 328 747

## Beschreibung

Die Erfindung betrifft ein System, insbesondere ein Haushaltsgerät, zum Druck und Garen eines Nahrungsmittels.

Nahrungsmitteldrucker können dazu verwendet werden, aus einer essbaren Druckmasse eine räumliche Anordnung von Druckmasse zu erzeugen. Die räumliche Anordnung von Druckmasse kann dann in einer separaten Gareinheit, insbesondere in einem separaten Ofen, gegart werden, um ein individualisiertes, gegartes Nahrungsmittel bereitzustellen.

Die US 2012/0328747 A1 beispielsweise beschreibt einen 3D-Nahrungsmitteldrucker. Aus der WO 2016/059023 A1 ist ein 3D-Nahrungsmitteldrucker als Einschub für einen handelsüblichen Backofen vorbekannt. Die EP 2 364 593 A1 beschäftigt sich mit einer Nahrungsmittelproduktionsanlage, bei der Teig auf ein Förderband gedruckt wird.

Das vorliegende Dokument befasst sich mit der technischen Aufgabe, ein System bereitzustellen, mit dem die Herstellung eines individualisierten, gegarten Nahrungsmittels vereinfacht und beschleunigt werden kann.

Die Aufgabe wird durch den Gegenstand des unabhängigen Patentanspruchs gelöst. Vorteilhafte fakultative Ausführungsformen sind insbesondere in den abhängigen Patentansprüchen definiert, in nachfolgender Beschreibung beschrieben oder in den Figuren der beigefügten Zeichnung dargestellt.

Gemäß einem Aspekt der Erfindung wird ein System zur Herstellung eines gegarten Nahrungsmittels beschrieben. Das System kann als ein Hausgerät bzw. ein Haushaltsgerät ausgebildet sein, das z.B. auf eine Arbeitsplatte einer Küche gestellt und/oder in einen Einbauschrank eingebaut werden kann. Insbesondere kann das System Dimensionen aufweisen (z.B. Kanten von 50cm Länge oder weniger), die das System für die Nutzung als Hausgerät befähigen.

Das System umfasst eine Druckkammer mit einem beweglichen Druckkopf zur Extrusion von Druckmasse, sowie eine Garkammer mit Mitteln zum Garen von Druckmasse. Die Kammern können innerhalb eines Gehäuses des Systems angeordnet sein. Insbesondere können die Kammern zumindest teilweise durch Wände eines Gehäuses des Systems gebildet werden. Die Druckkammer kann für den Druck eines Nahrungsmittels verwendet werden, und die Garkammer kann für das Garen eines Nahrungsmittels verwendet werden.

Das System umfasst weiter eine bewegliche Ablagefläche, die durch einen Bewegungsmechanismus zwischen der Druckkammer (d.h. einer ersten Stellung bzw. Position) und der Garkammer (d.h. einer zweiten Stellung bzw. Position) bewegt werden kann. Die Ablagefläche kann, insbesondere wenn sich die Ablagefläche in oder an der Druckkammer (d.h. in der ersten Stellung) befindet, eine Wand der Druckkammer und/oder der Garkammer bilden. Das System kann für die Bewegung der Ablagefläche eine zwischen der Druckkammer und der Garkammer verlaufende Führungsschiene umfassen, entlang der die bewegliche Ablagefläche mittels des Bewegungsmechanismus zwischen der Drucckammer und der Garkammer bewegt werden kann. So kann eine effiziente und präzise Bewegung der Ablagefläche ermöglicht werden.

Das System umfasst weiter eine Steuereinheit, die eingerichtet ist, zu veranlassen, dass die bewegliche Ablagefläche zur Erzeugung einer räumlichen Anordnung von Druckmasse in der Druckkammer und/oder unterhalb des Druckkopfes (d.h. in der ersten Stellung) angeordnet ist. Außerdem ist die Steuereinheit eingerichtet, den Druckkopf anzusteuern, eine räumliche Anordnung von Druckmasse auf der Ablagefläche zu erzeugen. Insbesondere kann (z.B. in Abhängigkeit von einem Rezept) Druckmasse aus ein oder mehreren Düsen des Druckkopfes extrudiert und auf der Ablagefläche abgelegt werden, so dass eine räumliche Anordnung von Druckmasse entsteht.

Die Steuereinheit ist weiter eingerichtet, den Bewegungsmechanismus anzusteuern, die bewegliche Ablagefläche mit der räumlichen Anordnung von Druckmasse in die Garkammer (d.h. in die zweite Stellung) zu überführen. Mit anderen Worten, die Ablagefläche kann von der ersten Stellung bzw. Position (für die Erstellung einer räumlichen Anordnung von Druckmasse) in die zweite Stellung bzw. Position (für das Garen der räumlichen Anordnung von Druckmasse) überführt werden. Außerdem ist die Steuereinheit eingerichtet, die Mittel zum Garen anzusteuern, um durch Garen der räumlichen Anordnung von Druckmasse ein gegartes Nahrungsmittel herzustellen.

Das System ermöglicht somit die komfortable und zuverlässige Herstellung von individuell gedruckten und gegarten Nahrungsmitteln. Insbesondere umfasst das System zu diesem Zweck eine bewegliche Ablagefläche, auf der das Nahrungsmittel gedruckt und gegart werden kann, und durch die das Nahrungsmittel in automatischer Weise von einer Drucckammer zum Druck des Nahrungsmittels zu einer Garkammer zum Garen des Nahrungsmittels überführt werden kann.

Die Druckkammer kann räumlich über der Garkammer angeordnet sein. Mit anderen Worten, die Garkammer kann in einem unteren Teil des Systems und die Druckkammer kann in einem darüber liegenden oberen Teil des Systems angeordnet sein. Der Bewegungsmechanismus kann eingerichtet sein, die Ablagefläche abzusenken, um die bewegliche Ablagefläche von der Druckkammer (d.h. von der ersten Stellung) in die Garkammer (d.h. in die zweite Stellung) zu überführen, bzw. die Ablagefläche hochzufahren, um die bewegliche Ablagefläche von der Garkammer (d.h. von der zweiten Stellung) in die Druckkammer (d.h. in die erste Stellung) zu überführen. Durch eine übereinander liegende Anordnung der Kammern kann ein besonders kompaktes System zur Herstellung eines gegarten Nahrungsmittels bereitgestellt werden.

Die Steuereinheit kann eingerichtet sein, die bewegliche Ablagefläche nach Beendigung eines Garvorgangs innerhalb der Garkammer von der Garkammer (d.h. von der zweiten Stellung) in die Druckkammer (d.h. in die erste Stellung) zu überführen, um das gegarte Nahrungsmittel für einen Nutzer des Systems zugänglich zu machen. So kann auf einen dedizierten Zugang (z.B. auf eine Klappe) zu der Garkammer verzichtet werden, wodurch die thermische Isolierung der Garkammer verbessert wird. Des Weiteren kann so erreicht werden, dass ein Nutzer das gegarte Nahrungsmittel in komfortabler und unkritischer Weise aus der relativ kühlen Druckkammer und nicht aus einer ggf. heißen Garkammer entnehmen kann.

Das System umfasst erfindungsgemäß ein oder mehrere Tore, mit denen die Garkammer von der Druckkammer abgegrenzt, insbesondere thermisch isoliert, werden kann. Die Steuereinheit ist dazu eingerichtet, zu veranlassen, dass die ein oder mehreren Tore geschlossen werden, um die Garkammer von der Druckkammer abzugrenzen, wenn die bewegliche Ablagefläche in die Garkammer überführt wird oder sobald die bewegliche Ablagefläche in die Garkammer überführt wurde. Durch die Bereitstellung von ein oder mehreren verschließbaren Toren kann ein zuverlässiges Garen innerhalb der Garkammer sichergestellt werden (da insbesondere ein Entweichen von Wärme aus der Garkammer vermieden werden kann). Des Weiteren können durch die ein oder mehreren verschließbaren Tore Verschmutzungen und/oder Beeinträchtigungen des Druckkopfes und/oder der Drucckammer durch den Garprozess vermieden werden.

Die Ablagefläche kann derart ausgelegt sein, dass die Ablagefläche die Druckkammer von der Garkammer abgrenzt, insbesondere thermisch isoliert, wenn die Ablagefläche in der Druckkammer und/oder unterhalb des Druckkopfes (d.h. in der ersten Stellung) angeordnet ist. Somit kann durch die Ablagefläche eine Wand der Garkammer gebildet werden, wenn sich die Ablagefläche in der ersten Stellung befindet. Die Steuereinheit kann eingerichtet sein, ein oder mehrere der Mittel zum Garen anzusteuern, die Garkammer vorzuheizen, wenn die bewegliche Ablagefläche zur Erzeugung der räumlichen Anordnung von Druckmasse in der Druckkammer und/oder unterhalb des Druckkopfes (d.h. in der ersten Stellung) angeordnet ist. Insbesondere kann durch die Abgrenzung zwischen Druckkammer und Garkammer und durch das Bilden einer geschlossenen Garkammer mittels der Ablagefläche, die Garkammer bereits während des Druckprozesses vorgeheizt werden, wodurch der anschließende Garprozess verkürzt werden kann. Somit ermöglicht eine entsprechend ausgebildete Ablagefläche eine Beschleunigung der Herstellung eines gegarten Nahrungsmittels.

Die Mittel zum Garen können in oder an der Ablagefläche ferromagnetisches Material umfassen. Des Weiteren können die Mittel zum Garen eine Induktionsspule umfassen, die derart ausgelegt ist, dass sie das ferromagnetische Material durch Erzeugung eines magnetischen Feldes erhitzen kann, wenn sich die Ablagefläche für einen Garvorgang innerhalb der Garkammer (d.h. in der zweiten Stellung) befindet. Die Verwendung von induzierter Wärme in oder an der Ablagefläche ermöglicht ein besonders effizientes Garen eines Nahrungsmittels. Insbesondere kann so ein gebratenes Nahrungsmittel hergestellt werden.

Alternativ oder ergänzend können die Mittel zum Garen ein oder mehrere Heizelemente umfassen, die eingerichtet sind, durch Konvektion (z.B. durch Erwärmung der Atmosphäre innerhalb der Garkammer) und/oder durch Strahlung (z.B. durch Mikrowellen) die Garkammer und/oder Druckmasse zu erhitzen. So kann z.B. ein gebackenes und/oder anderweitig erwärmtes Nahrungsmittel bereitgestellt werden.

Der Druckkopf kann ein oder mehrere Druckmasse-Behälter mit jeweils zumindest einer Düse umfassen, durch die Druckmasse aus dem jeweiligen Druckmasse-Behälter auf die Ablagefläche extrudiert werden kann. Durch die Bereitstellung von mehreren Druckmasse-Behältern können komplexe Nahrungsmittel (z.B. mit schichtweise unterschiedlichen Druckmassen) hergestellt werden.

Der Druckkopf kann zumindest eine Temperierungseinheit (z.B. eine Heizung und/oder Kühlung) für zumindest einen Druckmasse-Behälter und/oder für zumindest eine Düse umfassen, mit der Druckmasse in dem Druckmasse-Behälter und/oder in der Düse temperiert werden kann, um Fließeigenschaften der Druckmasse zu verändern. Durch die Temperierung der Druckmasse kann eine präzise Herstellung von Nahrungsmitteln gewährleistet werden.

Das System kann ein Führungsmodul umfassen, mit dem der Druckkopf zumindest innerhalb einer Ebene (z.B. in einer X/Y-Ebene parallel zu der Ablagefläche, in einem bestimmten Abstand Z zu der Ablagefläche) über der beweglichen Ablagefläche bewegt werden kann. Die Steuereinheit kann eingerichtet sein, das Führungsmodul und/oder den Bewegungsmechanismus anzusteuern, um die räumliche Anordnung von Druckmasse auf der beweglichen Ablagefläche zu erzeugen.

Die Steuereinheit kann insbesondere eingerichtet sein, den Bewegungsmechanismus der Ablagefläche anzusteuern, einen Abstand zwischen der Ablagefläche und dem Druckkopf zu verändern, um schichtweise Druckmasse auf die räumliche Anordnung von Druckmasse aufzutragen. Durch eine Anpassung des Abstands während des Druckprozesses können in präziser Weise unterschiedliche Schichten auf die Anordnung von Druckmasse aufgetragen werden. Dabei ist eine Bewegung der Ablagefläche vorteilhaft, da so ein Kosten-günstiger und Bauraum-effizienter Druckkopf verwendet werden kann, der nicht in Z-Richtung bewegt werden kann. Mit anderen Worten, die Anpassung des Abstands zwischen Druckkopf und Ablagefläche kann (ggf. ausschließlich) durch Bewegung der Ablagefläche bewirkt werden.

Es ist zu beachten, dass jegliche Aspekte des in diesem Dokument beschriebenen Systems in vielfältiger Weise miteinander kombiniert werden können. Insbesondere können die Merkmale der Patentansprüche in vielfältiger Weise miteinander kombiniert werden.

Im Weiteren wird die Erfindung anhand von in den Figuren der beigefügten Zeichnung dargestellten Ausführungsbeispielen näher beschrieben. Dabei zeigen
- Figur 1: ein Blockdiagramm eines Systems zur Herstellung eines Nahrungsmittels in einem Druckzustand; und
- Figur 2: ein Blockdiagramm eines Systems zur Herstellung eines Nahrungsmittels in einem Garzustand.

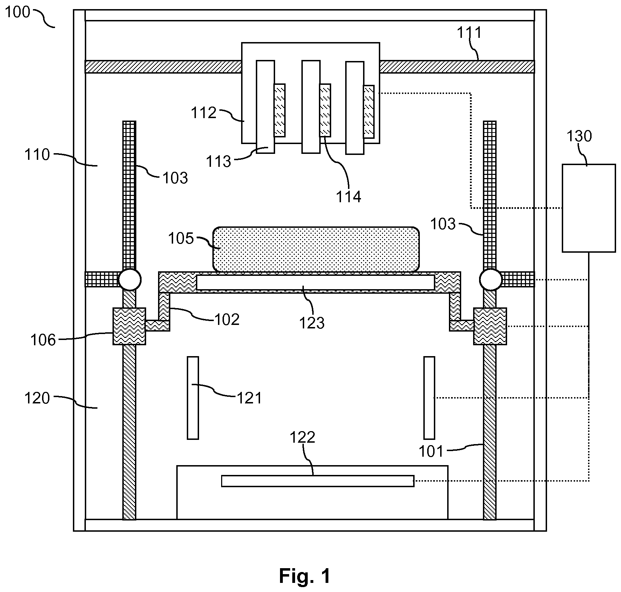

Wie eingangs dargelegt, befasst sich das vorliegende Dokument mit der komfortablen Herstellung von individualisierten, gegarten Nahrungsmitteln. In diesem Zusammenhang zeigt Fig. 1 ein System 100 zur Herstellung eines Nahrungsmittels, das eine bewegliche Ablagefläche 102 aufweist, mit der eine räumliche Anordnung von Druckmasse für ein Nahrungsmittel 105 von einer Druckkammer 110 in eine Garkammer 120 überführt werden kann, um das Nahrungsmittel 105 zu garen. Des Weiteren kann nach Abschluss des Garvorgangs ein fertig gegartes Nahrungsmittel 105 wieder mittels der beweglichen Ablagefläche 102 aus der Garkammer 120 in die Druckkammer 110 überführt werden, um eine komfortable Entnahme des gegarten Nahrungsmittels 105 zu ermöglichen. So kann in komfortabler und individueller Weise ein Nahrungsmittel 105 innerhalb eines einzigen Systems bzw. innerhalb eines einzigen Gerätes 100 gedruckt, gegart und bereitgestellt werden.

In dem in Fig. 1 dargestellten Beispiel ist die Druckkammer 110 (für den Druck einer räumlichen Anordnung von Druckmasse) oberhalb bzw. über der Garkammer 120 angeordnet. Die bewegliche Ablagefläche 102 kann entlang ein oder mehrerer Führungsschienen 101 von der oben liegenden Druckkammer 110 in die darunter liegende Garkammer 120 bewegt werden. Zu diesem Zweck kann die bewegliche Ablagefläche 102 mit einem Bewegungsmechanismus 106 (z.B. mit einem durch einen Motor angetriebenen Zahnrad) entlang der ein oder mehreren Führungsschienen 101 geführt werden.

Die Druckkammer 110 umfasst einen Druckkopf 112 mit einer oder mehreren Düsen 113, wobei durch jede Düse 113 jeweils eine Art von Druckmasse auf die Ablagefläche 102 extrudiert werden kann, um eine räumliche Anordnung von Druckmasse zu erzeugen. Eine Düse 113 kann Mittel 114 aufweisen, mit denen die Fließeigenschaften der jeweiligen Druckmasse beeinflusst werden kann. Beispielsweise können die Mittel 114 eine Temperierungseinheit, insbesondere eine Heiz- und/oder Kühleinheit, zur Anpassung der Temperatur der zu extrudierenden Druckmasse umfassen.

Der Druckkopf 112 kann mit einem Führungsmodul 111 an unterschiedliche Positionen über der Ablagefläche 102 bewegt werden, um an unterschiedlichen Positionen Druckmasse extrudieren zu können. Insbesondere kann der Druckkopf 112 in X- und Y-Richtung innerhalb einer Ebene (bei gleichem Abstand zur Ablagefläche 102) bewegt werden. Des Weiteren kann der Druckkopf 112 ggf. in Z-Richtung bewegt werden, um den Abstand zwischen Druckkopf 112 und Ablagefläche 102 zu verändern.

Der Druckkopf 112 und das Führungsmodul 111 können über eine Steuereinheit 130 des Systems 100 angesteuert werden, um den Druckkopf 112 zu bewegen und um Druckmasse zu extrudieren. Dabei können der Druckkopf 112 und das Führungsmodul 111 in Abhängigkeit von einem Rezept angesteuert werden, wobei das Rezept die Form der zu erstellenden räumlichen Anordnung von Druckmasse und die Positionen, Mengen und Arten der dazu zu extrudierenden ein oder mehreren Druckmassen spezifiziert. So kann in zuverlässiger Weise innerhalb der Druckkammer 110 eine räumliche Anordnung von Druckmasse generiert werden.

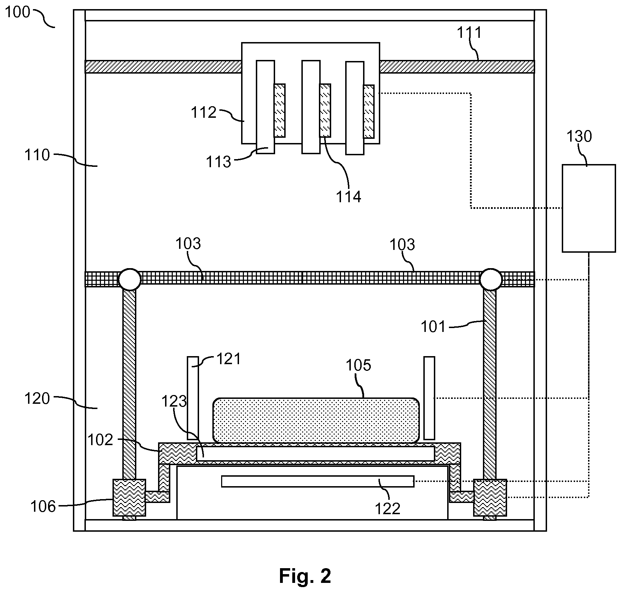

Nach Fertigstellung der räumlichen Anordnung von Druckmasse kann der Bewegungsmechanismus 106 durch die Steuereinheit 130 angesteuert werden, um die Ablagefläche 102 von der Druckkammer 110 (d.h. von einer in Fig. 1 dargestellten ersten Stellung) in die Garkammer 120 (d.h. in eine in Fig. 2 dargestellte zweite Stellung) zu bewegen (z.B. abzusenken). Fig. 2 zeigt den Zustand des Systems 100, wenn sich die Ablagefläche 102 für einen Garvorgang in der Garkammer 120 (d.h. in der zweiten Stellung) befindet. Die Garkammer 120 kann für den Garvorgang durch verschließbare Tore 103 zur Druckkammer 110 hin verschlossen werden. So kann eine zuverlässige thermische Isolierung zwischen Garkammer 120 und Druckkammer 110 bereitgestellt werden. Des Weiteren können durch die Tore 103 Verschmutzungen oder Beeinträchtigungen der Druckkammer 110 aufgrund des Garvorgangs vermieden werden. Das Öffnen bzw. Schließen der Tore 103 kann durch die Steuereinheit 130 veranlasst werden.

Die Garkammer 120 weist ein oder mehrere Mittel 121, 122, 123 zum Garen der räumlichen Anordnung von Druckmasse auf. Die Mittel 121, 122, 123 zum Garen können z.B. eine Induktionsspule 122 umfassen, mit denen ferromagnetisches Material 123 in oder an der Ablagefläche 102 erhitzt werden kann, um von Unten her die räumliche Anordnung von Druckmasse zu erwärmen bzw. zu erhitzen und damit zu garen. Des Weiteren können die Mittel 121, 122, 123 zum Garen ein oder mehrere Heizvorrichtungen 121 umfassen (z.B. seitlich zu der räumlichen Anordnung von Druckmasse), z.B. um die Garkammer 120 aufzuheizen und um damit die räumliche Anordnung von Druckmasse zu einem gegarten Nahrungsmittel 105 zu verarbeiten. Die Mittel 121, 122, 123 zum Garen können durch die Steuereinheit 130 angesteuert werden (insbesondere in Abhängigkeit von einem Rezept, das Parameter des Garvorgangs beschreibt).

Es kann somit ein System 100 (und insbesondere ein Hausgerät) bereitgestellt werden, das in autonomer Weise ein Nahrungsmittel 105 drucken und garen kann. Insbesondere kann das Nahrungsmittel 105 in effektiver und autonomer Weise durch eine bewegliche Ablagefläche von einer Druckkammer 110 des Systems 100 in eine Garkammer 120 des Systems 100 (und umgekehrt) befördert werden. So kann der Komfort und der Zeitaufwand für die Herstellung eines Nahrungsmittels 105 reduziert werden. Des Weiteren kann durch die Integration von Druckkammer 110 und Garkammer 120 in ein einziges System 100 (mit einem einzigen Gehäuse) der erforderliche Platzaufwand reduziert werden. Dies gilt insbesondere, wenn Druckkamer 110 und Garkammer 120 übereinander angeordnet sind.

Beispielsweise kann das System ein Gehäuse mit vier Seitenwänden, einer Bodenfläche und einer Deckfläche aufweisen. Die Garkammer 120 und die Druckkammer 110 können durch jeweils unterschiedliche Bereiche der vier Seitenwände des Gehäuses des Systems gebildet werden. Des Weiteren kann die Druckkammer 110 durch die Deckfläche des Gehäuses des Systems begrenzt werden. Die Garkammer 120 kann wiederum durch die Bodenfläche des Gehäuses des Systems begrenzt werden. Zwischen der Garkammer 120 und der Druckkammer 110 kann je nach Stellung der Ablagefläche 102 eine Abgrenzung durch die Ablagefläche 102 selbst oder durch die ein oder mehreren verschließbare Tore 103 bewirkt werden.

Die bewegliche Ablagefläche 102 kann somit derart ausgelegt sein, dass sie im Druckzustand des Systems 100 die Druckkammer 110 von der Garkammer 120 separiert. So kann die Garkammer 120 bereits während des Druckvorgangs vorgeheizt werden, wodurch der Zeitaufwand zur Herstellung eines Nahrungsmittels 105 reduziert werden kann.

Die vorliegende Erfindung ist nicht auf die gezeigten Ausführungsbeispiele beschränkt. Insbesondere ist zu beachten, dass die Beschreibung und die Figuren nur das Prinzip des vorgeschlagenen Systems veranschaulichen sollen.

## Patentansprüche

1. System (100) zur Herstellung eines gegarten Nahrungsmittels (105), wobei das System (100) umfasst:
- eine Druckkammer (110) mit einem beweglichen Druckkopf (112) zur Extrusion von Druckmasse;
- eine Garkammer (120) mit Mitteln (121, 122, 123) zum Garen von Druckmasse;
- eine bewegliche Ablagefläche (102), die durch einen Bewegungsmechanismus (106) zwischen der Druckkammer (110) und der Garkammer (120) bewegt werden kann; und
- eine Steuereinheit (130), die eingerichtet ist,
- zu veranlassen, dass die bewegliche Ablagefläche (102) zur Erzeugung einer räumlichen Anordnung von Druckmasse in der Druckkammer (110) unterhalb des Druckkopfes (112) angeordnet ist;
- den Druckkopf (112) anzusteuern, um eine räumliche Anordnung von Druckmasse auf der Ablagefläche (102) zu erzeugen;
- den Bewegungsmechanismus (106) anzusteuern, um die bewegliche Ablagefläche (102) mit der räumlichen Anordnung von Druckmasse in die Garkammer (120) zu überführen; und
- die Mittel (121, 122, 123) zum Garen anzusteuern, um durch Garen der räumlichen Anordnung von Druckmasse ein gegartes Nahrungsmittel (105) herzustellen;
**dadurch gekennzeichnet, dass**
- das System (100) ein oder mehrere Tore (103) umfasst, mit denen die Garkammer (120) von der Druckkammer (110) abgegrenzt werden kann; und
- die Steuereinheit (130) eingerichtet ist, zu veranlassen, dass die ein oder mehreren Tore (103) geschlossen werden, um die Garkammer (120) von der Druckkammer (110) abzugrenzen, wenn die bewegliche Ablagefläche (102) in die Garkammer (120) überführt wird oder wurde.

2. System (100) gemäß Anspruch 1, wobei
- die Druckkammer (110) räumlich über der Garkammer (120) angeordnet ist; und
- der Bewegungsmechanismus (106) eingerichtet ist, die Ablagefläche (102) abzusenken, um die bewegliche Ablagefläche (102) von der Druckkammer (110) in die Garkammer (120) zu überführen.

3. System (100) gemäß einem der vorhergehenden Ansprüche, wobei die Steuereinheit (130) eingerichtet ist, die bewegliche Ablagefläche (102) nach Beendigung eines Garvorgangs innerhalb der Garkammer (120) von der Garkammer (120) in die Druckkammer (110) zu überführen, um das gegarte Nahrungsmittel (105) für einen Nutzer des Systems (100) zugänglich zu machen.

4. System (100) gemäß einem der vorhergehenden Ansprüche, wobei die ein oder mehreren Tore (103) die Garkammer (120) von der Druckkammer (110) thermisch isolieren.

5. System (100) gemäß einem der vorhergehenden Ansprüche, wobei die Ablagefläche (102) derart ausgelegt ist, dass die Ablagefläche (102) die Druckkammer (110) von der Garkammer (120) abgrenzt, wenn die Ablagefläche in der Druckkammer (110) unterhalb des Druckkopfes (112) angeordnet ist.

6. System (100) gemäß Anspruch 5, wobei die Steuereinheit (130) eingerichtet ist, ein oder mehrere der Mittel (121, 122, 123) zum Garen anzusteuern, die Garkammer (120) vorzuheizen, wenn die bewegliche Ablagefläche (102) zur Erzeugung der räumlichen Anordnung von Druckmasse in der Druckkammer (110) unterhalb des Druckkopfes (112) angeordnet ist.

7. System (100) gemäß einem der vorhergehenden Ansprüche, wobei die Mittel (121, 122, 123) zum Garen umfassen,
- ferromagnetisches Material (123), das in oder an der Ablagefläche (102) angeordnet ist; und
- eine Induktionsspule (122), die derart ausgelegt ist, dass sie das ferromagnetische Material (123) durch Erzeugung eines magnetischen Feldes erhitzen kann, wenn sich die Ablagefläche (102) für einen Garvorgang innerhalb der Garkammer (120) befindet.

8. System (100) gemäß einem der vorhergehenden Ansprüche, wobei die Mittel (121, 122, 123) zum Garen ein oder mehrere Heizelemente (121) umfassen, die eingerichtet sind, durch Konvektion und/oder durch Strahlung die Garkammer (120) und/oder Druckmasse zu erhitzen.

9. System (100) gemäß einem der vorhergehenden Ansprüche, wobei der Druckkopf (112) ein oder mehrere Druckmasse-Behälter mit jeweils zumindest einer Düse (113) umfasst, durch die Druckmasse auf die Ablagefläche (102) extrudiert werden kann.

10. System (100) gemäß Anspruch 9, wobei der Druckkopf (112) zumindest eine Temperierungseinheit (114) für zumindest einen Druckmasse-Behälter und/oder für eine Düse (113) umfasst, mit der Druckmasse in dem Druckmasse-Behälter und/oder in der Düse (113) temperiert werden kann, um Fließeigenschaften der Druckmasse zu verändern.

11. System (100) gemäß einem der vorhergehenden Ansprüche, wobei
- das System (100) ein Führungsmodul (111) umfasst, mit dem der Druckkopf (112) zumindest innerhalb einer Ebene über der beweglichen Ablagefläche (102) bewegt werden kann; und
- die Steuereinheit (130) eingerichtet ist, das Führungsmodul (111) und/oder den Bewegungsmechanismus (106) anzusteuern, um die räumliche Anordnung von Druckmasse auf der beweglichen Ablagefläche (102) zu erzeugen.

12. System (100) gemäß Anspruch 11, wobei die Steuereinheit (130) eingerichtet ist, den Bewegungsmechanismus (106) der Ablagefläche (102) anzusteuern, einen Abstand zwischen der Ablagefläche (102) und dem Druckkopf (112) zu verändern, um schichtweise Druckmasse auf die räumliche Anordnung von Druckmasse aufzutragen.

13. System (100) gemäß einem der vorhergehenden Ansprüche, wobei das System (100) eine zwischen der Druckkammer (110) und der Garkammer (120) verlaufende Führungsschiene (101) umfasst, entlang der die bewegliche Ablagefläche (102) mittels des Bewegungsmechanismus (106) zwischen der Druckkammer (110) und der Garkammer (120) bewegt werden kann.

14. System (100) gemäß einem der vorhergehenden Ansprüche, wobei das System (100) als ein Hausgerät ausgebildet ist, das auf eine Arbeitsplatte einer Küche gestellt und/oder in einen Einbauschrank einer Küche eingebaut werden kann.

## Claims

1. System (100) for producing a cooked foodstuff (105), wherein the system (100) comprises:
- a printing chamber (110) with a mobile printhead (112) for extruding printing mass;
- a cooking chamber (120) with means (121, 122, 123) for cooking printing mass;
- a mobile tray (102), which can be moved between the printing chamber (110) and the cooking chamber (120) by means of a movement mechanism (106); and
- a control unit (130), which is configured
- to trigger the mobile tray (102) to be arranged in the printing chamber (110) below the printhead (112) in order for a spatial arrangement of printing mass to be generated;
- to activate the printhead (112), in order to generate a spatial arrangement of printing mass on the tray (102);
- to activate the movement mechanism (106), in order to transfer the mobile tray (102) with the spatial arrangement of printing mass into the cooking chamber (120); and
- to activate the means (121, 122, 123) for cooking in order to produce a cooked foodstuff (105) by cooking the spatial arrangement of printing mass,
**characterised in that**
- the system (100) comprises one or more doors (103), with which the cooking chamber (120) can be cut off from the printing chamber (110); and
- the control unit (130) is configured to trigger the one or more doors (103) to be closed, in order to cut off the cooking chamber (120) from the printing chamber (110) when the mobile tray (102) is or has been transferred into the cooking chamber (120).

2. System (100) according to claim 1, wherein
- the printing chamber (110) is arranged spatially above the cooking chamber (120); and
- the movement mechanism (106) is configured to lower the tray (102), in order to transfer the mobile tray (102) from the printing chamber (110) into the cooking chamber (120).

3. System (100) according to one of the preceding claims, wherein the control unit (130) is configured to transfer the mobile tray (102), once a cooking process within the cooking chamber (120) is complete, from the cooking chamber (120) into the printing chamber (110), in order to make the cooked foodstuff (105) accessible to a user of the system (100).

4. System (100) according to one of the preceding claims, wherein
- the one or more doors (103) thermally insulate the cooking chamber (120) from the printing chamber (110).

5. System (100) according to one of the preceding claims, wherein the tray (102) is designed such that the tray (102) cuts off the printing chamber (110) from the cooking chamber (120), when the tray is arranged in the printing chamber (110) below the printhead (112).

6. System (100) according to claim 5, wherein the control unit (130) is configured to activate one or more of the means (121, 122, 123) for cooking in order to preheat the cooking chamber (120) when the mobile tray (102) is arranged in the printing chamber (110) below the printhead (112) in order for the spatial arrangement of printing mass to be generated.

7. System (100) according to one of the preceding claims, wherein the means (121, 122, 123) for cooking comprise,
- ferromagnetic material (123), which is arranged in or on the tray (102); and
- an induction coil (122), which is designed such that it can heat the ferromagnetic material (123) by generating a magnetic field when the tray (102) is disposed within the cooking chamber (120) for a cooking process.

8. System (100) according to one of the preceding claims, wherein the means (121, 122, 123) for cooking comprise one or more heating elements (121), which are configured to heat the cooking chamber (120) and/or printing mass by means of convection and/or by means of irradiation.

9. System (100) according to one of the preceding claims, wherein the printhead (112) comprises one or more printing mass containers with in each case at least one nozzle (113), by means of which printing mass can be extruded onto the tray (102).

10. System (100) according to claim 9, wherein the printhead (112) can comprise at least one tempering unit (114) for at least one printing mass container and/or for a nozzle (113), with which printing mass in the printing mass container and/or in the nozzle (113) can be tempered in order to change flow characteristics of the printing mass.

11. System (100) according to one of the preceding claims, wherein
- the system (100) comprises a guide module (111), with which the printhead (112) can be moved over the mobile tray (102) at least within one plane; and
- the control unit (130) is configured to activate the guide module (111) and/or the movement mechanism (106) in order to generate the spatial arrangement of printing mass on the mobile tray (102).

12. System (100) according to claim 11, wherein the control unit (130) is configured to activate the movement mechanism (106) of the tray (102), to change a distance between the tray (102) and the printhead (112), in order to apply printing mass to the spatial arrangement of printing mass in layers.

13. System (100) according to one of the preceding claims, wherein the system (100) comprises a guide rail (101) which runs between the printing chamber (110) and the cooking chamber (120), along which the mobile tray (102) can be moved between the printing chamber (110) and the cooking chamber (120) by means of the movement mechanism (106).

14. System (100) according to one of the preceding claims, wherein the system (100) is embodied as a household appliance which is placed on a work surface in a kitchen and/or can be integrated into a built-in cupboard in a kitchen.

## Revendications

1. Système (100) destiné à la réalisation d'un aliment cuit (105), le système (100) comprenant :
- une chambre de compression (110) dotée d'une tête de compression mobile (112) pour l'extrusion d'une masse à comprimer ;
- une chambre de cuisson (120) dotée de moyens (121, 122, 123) pour la cuisson de la masse à comprimer ;
- une surface mobile de dépose (102) qui peut être déplacée entre la chambre de compression (110) et la chambre de cuisson (120) au moyen d'un mécanisme de déplacement (106) ; et
- une unité de commande (130) qui est configurée
- pour amener la surface mobile de dépose (102) à être disposée en dessous de la tête de compression (112) pour générer une disposition spatiale de la masse à comprimer dans la chambre de compression (110) ;
- pour commander la tête de compression (112) afin de générer une disposition spatiale de la masse à comprimer sur la surface de dépose (102) ;
- pour commander le mécanisme de déplacement (106) pour transférer la surface mobile de dépose (102) dans la chambre de cuisson (120) avec la disposition spatiale de la masse à comprimer ; et
- pour commander les moyens (121, 122, 123) afin de réaliser un aliment cuit (105) par cuisson de la disposition spatiale de la masse à comprimer ;
**caractérisé en ce que**
- le système (100) comprend une ou plusieurs portes (103) à l'aide desquelles la chambre de cuisson (120) peut être séparée de la chambre de compression (110) ; et
- **en ce que** l'unité de commande (130) est configurée pour amener l'une ou les plusieurs portes (103) à être fermées afin de séparer la chambre de cuisson (120) de la chambre de compression (110) lorsque la surface mobile de dépose (102) est transférée ou a été transférée dans la chambre de cuisson (120).

2. Système (100) selon la revendication 1, dans lequel
- la chambre de compression (110) est spatialement disposée au-dessus de la chambre de cuisson (120) ; et dans lequel
- le mécanisme de déplacement (106) est configuré pour abaisser la surface de dépose (102) afin de transférer la surface mobile de dépose (102) de la chambre de compression (110) dans la chambre de cuisson (120).

3. Système (100) selon l'une quelconque des revendications précédentes, dans lequel l'unité de commande (130) est configurée pour transférer la surface mobile de dépose (102) de la chambre de cuisson (120) dans la chambre de compression (110) après la fin d'une opération de cuisson à l'intérieur de la chambre de cuisson (120) afin de rendre l'aliment cuit (105) accessible à un utilisateur du système (100).

4. Système (100) selon l'une quelconque des revendications précédentes, dans lequel l'une ou les plusieurs portes (103) isolent la chambre de cuisson (120) thermiquement de la chambre de compression (110).

5. Système (100) selon l'une quelconque des revendications précédentes, dans lequel la surface de dépose (102) est conçue de manière à ce que la surface de dépose (102) sépare la chambre de compression (110) de la chambre de cuisson (120) lorsque la surface de dépose est disposée en dessous de la tête de compression (112) dans la chambre de compression (110).

6. Système (100) selon la revendication 5, dans lequel l'unité de commande (130) est configurée pour commander un ou plusieurs des moyens (121, 122, 123) pour la cuisson, pour préchauffer la chambre de cuisson (120) lorsque la surface mobile de dépose (102) est disposée en dessous de la tête de compression (112) pour générer la disposition spatiale de la masse à comprimer dans la chambre de compression (110).

7. Système (100) selon l'une quelconque des revendications précédentes, dans lequel les moyens (121, 122, 123) pour la cuisson comprennent
- de la matière ferromagnétique (123) qui est disposée dans ou sur la surface de dépose (102) ; et
- une bobine à induction (122) qui est conçue de manière à ce qu'elle puisse échauffer la matière ferromagnétique (123) en générant un champ magnétique lorsque la surface de dépose (102) se trouve à l'intérieur de la chambre de cuisson (120) pour une opération de cuisson.

8. Système (100) selon l'une quelconque des revendications précédentes, dans lequel les moyens (121, 122, 123) pour la cuisson comprennent un ou plusieurs éléments chauffants (121) qui sont configurés pour échauffer la chambre de cuisson (120) et/ou la masse à comprimer par convection et/ou par rayonnement.

9. Système (100) selon l'une quelconque des revendications précédentes, dans lequel la tête de compression (112) comprend un ou plusieurs récipients de masse à comprimer dotés de respectivement au moins une buse (113) au moyen de laquelle la masse à comprimer peut être extrudée sur la surface de dépose (102).

10. Système (100) selon la revendication 9, dans lequel la tête de compression (112) comprend au moins une unité de régulation de température (114) pour au moins un récipient de masse à comprimer et/ou pour une buse (113), au moyen de laquelle la masse à comprimer peut être tempérée dans le récipient de masse à comprimer et/ou dans la buse (113) afin de modifier les caractéristiques d'écoulement de la masse à comprimer.

11. Système (100) selon l'une quelconque des revendications précédentes, dans lequel
- le système (100) comprend un module de guidage (111) à l'aide duquel la tête de compression (112) peut être déplacée au moins à l'intérieur d'un plan au-dessus de la surface mobile de dépose (102) ; et dans lequel
- l'unité de commande (130) est configurée pour commander le module de guidage (111) et/ou le mécanisme de déplacement (106) afin de générer la disposition spatiale de la masse à comprimer sur la surface mobile de dépose (102).

12. Système (100) selon la revendication 11, dans lequel l'unité de commande (130) est configurée pour commander le mécanisme de déplacement (106) de la surface de dépose (102), pour modifier un écart entre la surface de dépose (102) et la tête de compression (112) afin d'appliquer la masse à comprimer couche par couche sur la disposition spatiale de la masse à comprimer.

13. Système (100) selon l'une quelconque des revendications précédentes, dans lequel le système (100) comprend un rail de guidage (101) s'étendant entre la chambre de compression (110) et la chambre de cuisson (120), le long duquel la surface mobile de dépose (102) peut être déplacée entre la chambre de compression (110) et la chambre de cuisson (120) au moyen du mécanisme de déplacement (106).

14. Système (100) selon l'une quelconque des revendications précédentes, dans lequel le système (100) est réalisé en tant qu'un appareil ménager qui peut être posé sur un plan de travail d'une cuisine et/ou être installé dans un meuble encastré d'une cuisine.
